Europäisches Patentamt

European Patent Office

Office européen des brevets

(19)

(11) Numéro de publication: **0 069 006**
**B1**

(12) **FASCICULE DE BREVET EUROPEEN**

(45) Date de publication du fascicule du brevet:
13.02.85

(51) Int. Cl.⁴: **H 01 F 29/12,** H 02 M 7/06

(21) Numéro de dépôt: 82401136.5

(22) Date de dépôt: 22.06.82

(54) Transformateur à secondaire mobile, en particulier pour le soudage.

(30) Priorité: 22.06.81 IT 2215981 U

(43) Date de publication de la demande:
05.01.83 Bulletin 83/1

(45) Mention de la délivrance du brevet:
13.02.85 Bulletin 85/7

(84) Etats contractants désignés:
AT BE CH DE FR GB LI LU NL

(56) Documents cités:
FR - A - 717 877
FR - A - 869 996
FR - A - 2 023 107
FR - A - 2 435 791
US - A - 2 274 015
US - A - 2 304 668
US - A - 3 089 074

(73) Titulaire: **SIEV SOCIETA' INDUSTRIA
ELETTROMECCANICA VENETA, Via Ortigara, 34,
I-36050 Olmo di Creazzo (Vicenza) (IT)**

(72) Inventeur: **Zilio, Adone, Viale Verdi 66, IT-Vicenza (IT)**

(74) Mandataire: **Leclercq, Maurice et al, L'AIR LIQUIDE
SOCIETE ANONYME POUR L'ETUDE ET
L'EXPLOITATION DES PROCEDES GEORGES
CLAUDE 75, Qual d'Orsay, F-75321 Paris Cedex 07 (FR)**

## Description

La présente invention concerne un transformateur à secondaire mobile, destiné particulièrement à être utilisé en soudage.

Parmi les transformateurs destinés à cette utilisation, on en connaît des triphasés ou monophasés présentant un enroulement primaire stationnaire constitué de bobinages entourant des colonnes appartenant à un circuit magnétique et complété par des culasses d'extrémité. Le secondaire, formé lui aussi de bobinages, est mobile par rapport au primaire en direction des colonnes ci-dessous, au moyen d'une vis commandée par une manivelle et reliée à une douille filetée ou à des écrous solidaires de la structure du secondaire.

A chaque position relative du secondaire par rapport au primaire, correspond un courant de sortie donné.

Pour l'assemblage du primaire et du secondaire, on fait appel à des »lames« interposées entre les spires de chaque bobinage pendant l'enroulement, opération qui entraîne un arrêt momentané de l'enroulement. Il y a lieu d'ajouter à cette perte de temps, celles découlant de la complexité de l'assemblage, notamment du secondaire auquel il faut connecter les plaques supportant les diodes redresseuses et faisant fonction de radiateurs thermiques et d'éléments de connexion électrique.

La présente innovation a pour but de réaliser un transformateur du type ci-dessous dont le secondaire est assemblé avec une simplicité et une facilité telles que les temps d'assemblages s'en trouvent réduits dans une proportion considérable. Conformément à l'invention, ce but, ainsi que d'autres qui seront is en évidence dans la description détaillée que suit, est atteint en prévoyant, pour le secondaire, un berceau auquel sont collés les bobinages, la connexion réciproque des berceaux par l'intermediaire des radiateurs des redresseurs et le support des parties destinées à coopérer avec la vis qui déplace le secondaire à des points formés par la coopération d'appendices des berceaux.

La description détaillée suivante, qui n'a qu'une valeur d'indication et qui se rapporte aux dessins joints, permet de mieux comprendre l'innovation. Dans ces dessins:

la figure 1 représente, en vue de face, le secondaire triphasé d'un transformateur triphasé à secondaire mobile;

la figure 2 représente, en vue de côté, le même secondaire;

la figure 3 représente une coupe longitudinale d'un berceau monté sur l'arbre fileté;

la figure 4 représente schématiquement le secondaire d'un transformateur monophasé réalisé conformément à l'innovation.

Aux dessins, on désigne par 1 les trois colonnes, ou montants, du circuit magnétique du transformateur, circuit complété par deux culasses annulaires, non représentées, qui se trouvent aux extrémités des colonnes. Au niveau d'une des culasses, chaque colonne est entourée par un bobinage et les trois bobinages sont connectés électriquement entre eux, constituant ainsi le primaire stationnaire du transformateur. Les culasses et le primaire ne sont pas représentés puisqu'ils ne font pas partie de l'objet de l'invention. Ils peuvent être bâtis selon une quelconque modalité connue: les bobinages primaires peuvent être enroulés directement sur les colonnes 1 avant la réunion de celles-ci, par soudage, par exemple, aux culasses d'extrémité.

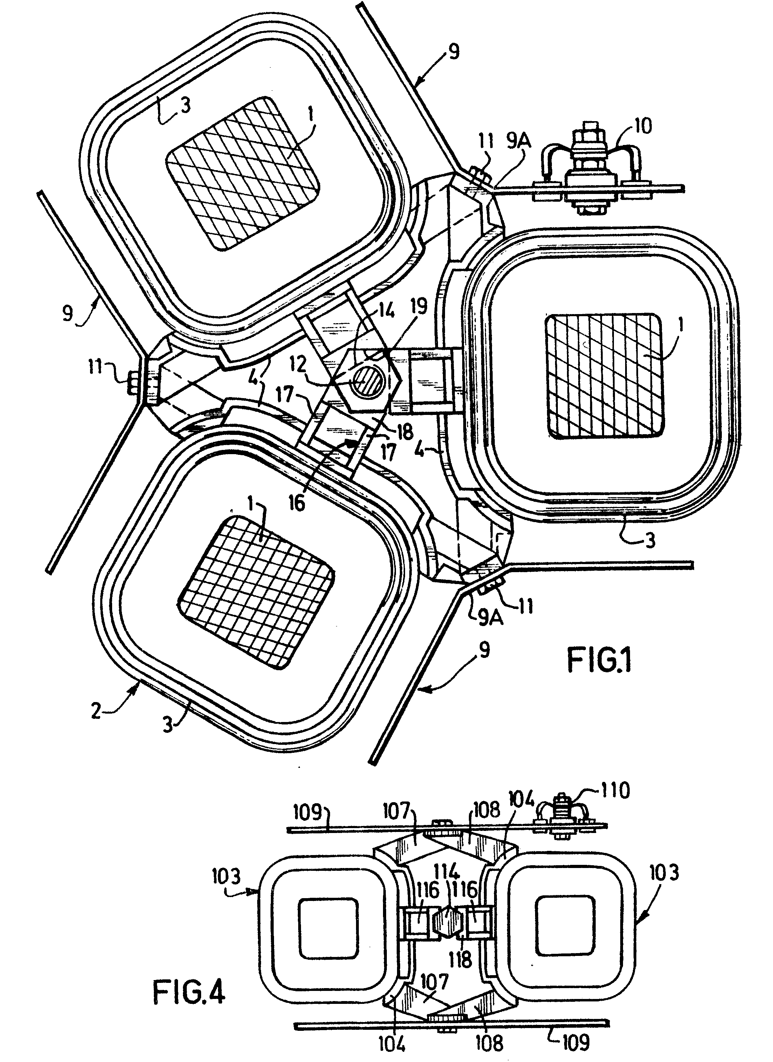

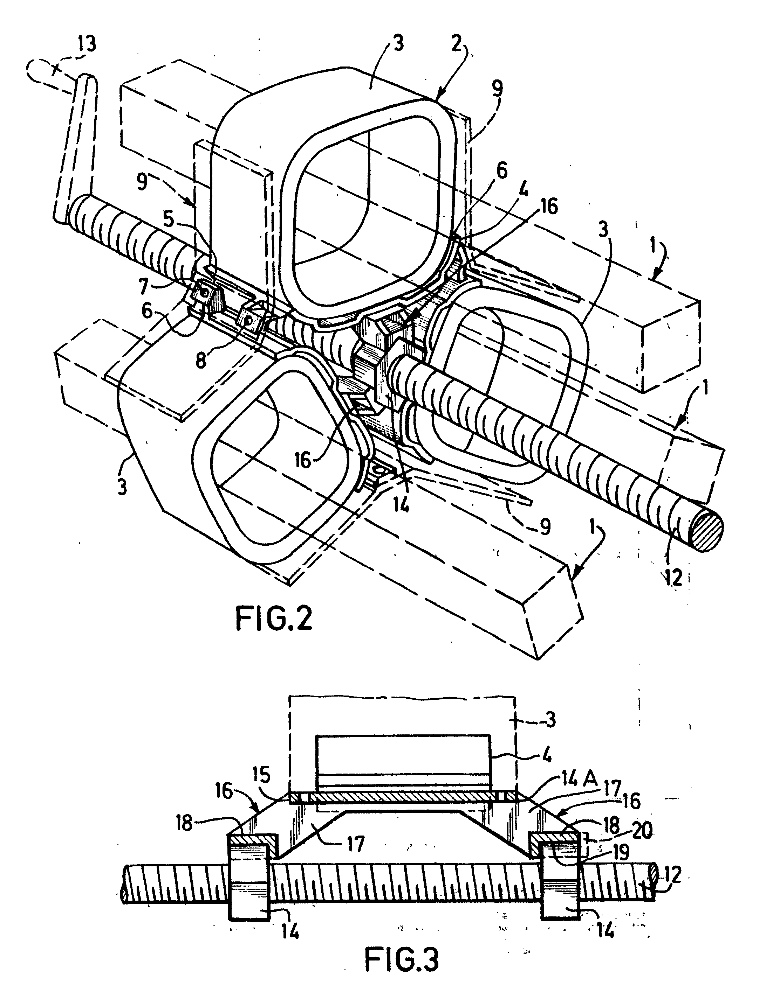

Le secondaire mobile 2 comprend, dans cet exemple, trois bobinages 3, dont chacun entoure une des colonnes 1 et est collé au moyen d'un adhésif à composant unique à un berceaux 4 qui a un profil transversal en form de envette et qui est fait d'un matériau isolant. Chaque berceau présente sur deux côtés opposés, 5 et 6, une saillie perforée 7, 8. Les deux saillies appartenant à un même berceau sont décalées, l'une à une extrémité du berceau, l'autre à l'autre extrémité. Ces saillies 7, 8 se terminent par des faces planes et inclinées, de sorte que quand les trois berceau du secondaire sont disposés selon les figures 1 et 2, la face de la saillie d'un berceau se trouve sur le même plan que la saillie du berceau contigu, ainsi que le montre clairement la figure 2. Contre les faces de ces paires de saillies (dans le présent exemple, il y a trois paires) se trouve appliquée une ailette ou radiateur métallique 9 portant les diodes 10 qui assurent le redressement des courants secondaires. Au moyen de vis, rivets ou clous 11, les radiateurs 9 sont fixés à la paire de saillies auxquelles ils adhèrent sur leur tronçon intermédiaire 9A. Les radiateurs 9 ont ici une forme en U très ouverte. On comprendra facilement que dans le secondaire, les trois berceaux 4 sont utilisés également en tant que moyens de connexion entre eux, ce qui rend facile, simple et immédiat le montage de la structure du secondaire.

Le secondaire 2 est déplacé par rapport au primaire au moyen d'une vis 12 montée de manière à pouvoir tourner, mais sans se déplacer par rapport à l'axe du bâti contenant le tranformateur et qui n'est pas représenté ici puisqu'il s'agit d'un élément bien connu ainsi que l'est le système de support de la vis 12. Cette vis est commandée par une manivelle ou volant 13 et, en contact avec des écrous 14 reliés au secondaire 2, ce dernier ce déplace par rapport au primaire afin d'adapter le courant émis par le secondaire 2 aux besoins de l'utilisateur.

Afin de maintenir en place les écrous 14, des saillies 16 sont prévues dans la région centrale de chaque berceaux 4, s'étendant vis l'axe de la vis 12, chacune est constituée d'une paire de bras parallèles 17, inclinés par rapport au berceau et ayant à leur extrémité une tête 18 avec un point 19 correspondant au profil d'une partie de la périphérie de l'écrou à six pans 14 comprenant une arête et une partie au moins des deux côtes de l'écrou que forment l'arête. Chaque êcrou est ainsi emprisonné sur trois de ses arêtes à 120° l'une de l'autre. Il faut observer que les dimensions sont telles que les écrous 14 sont serrés étroitement entre les têtes 18 que font ainsi fonction de serre-câbles. Pour éviter tout danger d'éloignement axial des écrous 14 des têtes 18 il est aussi possible, bien que non indispensable, de prévoir la fermenture des points 19 des têtes 18 par une cloison 20 (représentée en pointillé dans la figure 3) contrairement à la version ouverte reproduite par ladite figure.

Il est évident que ce même critère peut s'appliquer au montage du secondaire d'un transformateur monophasé qui comprendra, dans ce cas, deux bobinages seulement. Ce secondaire est reproduit schématiquement dans la figure 4. Dans cette dernière figure, les parties égales ou correspondantes ont été désignées par les mêmes numéros de référence, mais augmentés de 100. On distingue dans cette figure deux berceaux 104 dont chacun porte un bobinage collé 103. Les radiateurs 109 des diodes 110 sont fixés au moyen de vis, rivets ou clous, aux saillies latérales décalées 107 et 108 desdits berceaux. Les saillies frontales 116 des berceaux retiennent par leurs têtes 118, les écrous 114 qui inter-agissent avec la vis pour produire le déplacement du secondaire.

Afin de prévenir des déplacements angulaires du secondaire, il est possible de lui relier, à l'aide, par exemple, des vis 11, des petites tiges frottant sur les colonnes 1.

## Revendications

1. Transformateur a secondaire mobile, destiné à être utilisé en particulier dans la soudure, comprenant un primaire stationnaire, un circuit magnétique avec des colonnes (1) et des culasses, un secondaire (2) mobile par rapport au primaire au moyen d'un accouplement avec une vis de commande de mouvement (12), un enroulement à bobinages (3) et redresseurs (10) avec radiateurs (9), caractérisé en ce que les bobinages du secondaire (2) sont collés à des berceaux (4) qui ont un profil transversal en forme de cuvette et qui sont connectés entre eux par l'intermédiaire des radiateurs (9) de redresseurs, et que l'accouplement à vis (12) prévoit des premières saillies (16) dans la région centrale de chaque berceau (4) s'etendant vers l'axe de la vis (12) et étant en connexion avec cette-ci.

2. Transformateur selon la revendication 1, caractérisé en ce que pour la connexion des berceaux (4) par l'intermédiaire des radiateurs (9) les berceaux (4) sont munis de deuxièmes saillies (7, 8), une à chaque bord qui est en face d'un bord correspondant d'un berceau (4) contigu, que ces saillies (7, 8) s'étendent transversalement à l'axe de la vis (12), qu'elles sont décalées l'une par rapport à l'autre sur les deux bords et qu'elles forment des surfaces coplanaires d'appui et de fixation des radiateurs (9).

3. Transformateur selon l'une des revendications 1 ou 2, caractérisé en ce que les premières saillies (16) des berceaux (4) forment des carités, permettant de loger en partie les écrous (14) que coopèrent avec la vis de commande (12) du mouvement du secondaire.

4. Transformateur selon l'une quelconque des revendications 1 à 3, caractérisé en ce que les berceaux (4) sont constitués par un matériau électriquement isolant.

## Patentansprüche

1. Transformator mit beweglicher Sekundärwicklung, insbesondere für den Einsatz beim Schweißen bestimmt, bestehend aus einer unbeweglichen Primärwicklung, einem Magnetkreis mit Säulen (1) und Jochen, einer in bezug auf die Primärwicklung mittels einer Schraubenkupplung zur Bewegungssteuerung (12) beweglichen Sekundärwicklung, einer Spulenwicklung (3) und Gleichrichtern (10) mit Kühlern (9), dadurch gekennzeichnet, daß die Wicklungen der Sekundärwicklung (2) an Träger (4) geklebt sind, die ein schalenförmiges Querprofil haben und durch die Kühler (9) der Gleichrichter miteinander verbunden sind, und daß die Schraubenkupplung (12) erste Vorsprünge (16) im mittleren Bereich jedes Trägers (4) vorsieht, die sich zur Mittellinie der Schraube (12) hin erstrecken und mit dieser in Verbindung stehen.

2. Transformator nach Anspruch 1, dadurch gekennzeichnet, daß die Träger (4) im Hinblick auf deren Anschluß über die Kühler (9) mit zweiten Vorsprüngen (7, 8) versehen sind, d. h. ein Vorsprung an jeder Kante, die einer entsprechenden Kante eines angrenzenden Trägers (4) gegenüberliegt, daß diese Vorsprünge (7, 8) sich quer zur Mittellinie der Schraube (12) erstrecken, daß sie über die beiden Kanten gegeneinander versetzt sind und daß sie koplanare Flächen zur Auflage und Befestigung der Kühler (9) bilden.

3. Transformator nach Anspruch 1 oder 2, dadurch gekennzeichnet, daß die ersten Vorsprünge (16) der Träger (4) Hohlräume bilden, in denen die Muttern (14), die mit der zur Steuerung der Bewegung der Sekundärwicklung bestimmten Schraube (12) zusammenwirken, teilweise untergebracht sind.

4. Transformator nach einem der Ansprüche 1 bis 3, dadurch gekennzeichnet, daß die Träger (4) aus einem elektrisch isolierenden Werkstoff bestehen.

## Claims

1. Transformer with movable secondary winding, especially for welding, including a stationary primary winding, a magnetic circuit with columns (1) and yokes, a secondary winding (2) movable in relation to the primary winding by means of a screw coupling (12), a coil winding (3) and rectifiers (10) with coolers (9), characterised by the fact that the secondary winding (2) coils are bonded to supports (4) with a trough-shaped cross-section and interconnected by the rectifier coolers (9), and that the screw coupling (12) is designed with its first projections (16) in the centre part of each support (4), extending towards the centre line of the screw coupling (12) and in connection with it.

2. Transformer as specified in paragraph 1, characterised by the fact that for interconnection of the supports (4) by the coolers (9), the supports (4) are fitted with second projections (7 and 8), one at each edge facing the matching edge of an adjoining support (4), that the projections (7 and 8) extend transversally to the centre line of the screw coupling (12), that they are offset in relation to each other on the two edges, and that they form coplanar support and fixing surfaces for coolers (9).

3. Transformer as specified in paragraph 1 or 2, characterised by the fact that the first projections (16) of the supports (4) form cavities in which part of the nuts (14) assisting the travel screw coupling (12) moving the secondary winding, can be housed.

4. Transformer as specified in paragraph 1, 2 or 3, characterised by the fact that the supports (4) are made of an electrically insulating material.

FIG.1

FIG.4

FIG.2

FIG.3